# EUROPEAN PATENT APPLICATION

(11) **EP 4 847 372 A1**
(43) Date of publication of application: **02.12.2026**
(21) Application number: 25179169.5
(22) Date of filing: 27.05.2025
(51) Int. Cl.: B64C 3/18, B64C 5/02, B64C 9/00, B64C 9/02

(54) **AERODYNAMIC CONTROL SURFACE FOR AN AIRCRAFT**

(71) Applicant: AIRBUS Operations GmbH, 21129 Hamburg (DE)
(72) Inventor: Lüttmann, Henrik, 21129 Hamburg (DE); Hilgers, Ralf, 21129 Hamburg (DE); Maties, Georgiana, 21129 Hamburg (DE)
(74) Representative: Airbus Germany

(57) **Abstract**

The present invention relates to an aerodynamic control surface (13) for an aircraft (1), comprising a shell structure (27) comprising a first side panel (23) and an opposite second side panel (25), and a spar structure (27) extending in a span direction (19) and attached to the first and second side panels (23, 25) for common movement with the first and second side panels (23, 25), wherein the spar structure (27) comprises or is attached to at least one hinge part (29) for enabling rotation of the aerodynamic control surface (13) about a hinge axis (17), wherein the aerodynamic control surface (13) comprises one or more actuator coupling points (31) for coupling the aerodynamic control surface (13) to one or more actuators for moving the aerodynamic control surface (13) about the hinge axis (17). The object to provide a more efficient aerodynamic control surface design that allows to include green material, is achieved in that the spar structure (27) includes a torsion box structure (33), and the one or more actuator coupling points (31) are arranged at the spar structure (27) for main load introduction from the one or more actuators into the spar structure (27).

## Description

The present invention relates to an aerodynamic control surface for an aircraft, such as e.g. a rudder, an elevator, an aileron, a flap, or a spoiler. A further aspect of the invention relates to an aircraft comprising such an aerodynamic control surface.

The aerodynamic control surface comprises a shell structure including a first side panel and a second side panel, and a spar structure extending in a span direction and attached to the first and second side panels for common movement with the first and second side panels. The spar structure comprises or is attached to at least one hinge part, e.g. hinge bracket, for enabling rotation of the aerodynamic control surface about a hinge axis. The aerodynamic control surface comprises one or more actuator coupling points, such as bearings or brackets, for coupling the aerodynamic control surface to one or more actuators for moving the aerodynamic control surface about the hinge axis.

Similar aerodynamic control surfaces are known in the art, such as rudders of vertical tail units. Such rudder structures usually have the actuator coupling points arranged at the shell structure, so that the shell structure acts as main load carrier which transfers the aerodynamic loads to the actuator coupling points and further to the vertical tail plane. In addition, the rudder shell needs to be able to take up high local loads near the actuator coupling points, which are caused by actuator malfunction or tolerances. In order to transfer these high local loads, the rudder shell is reinforced around the actuator coupling points. The known rudder spar is usually a simple C-shaped component that connects the two side panels of the rudder shell and is the fundament for the rudder hinge brackets. The entire rudder is usually formed of fiber composite material, in particular CFRP and GFRP.

Under normal flight conditions, the only forces acting on the rudder are aerodynamic loads, which are relatively low. This makes the rudder structures generally perfectly suitable to introduce the use of green materials, such as green fiber materials including natural and/or recycled fibers, usually having lower mechanical properties, in primary structures, e.g. for environmental reasons. However, the high internal loads resulting from potential actuator failure cases and tolerances that have to be considered require a strong structural integrity and prohibit the use of lower performance green material. Thus, the rudder shell currently takes both internal (actuator failure) and external (aerodynamic) loads, but the current high strength of the rudder structure is rarely required.

The object of the present invention is to provide a more efficient aerodynamic control surface design that allows to include green material.

This object is achieved in that the spar structure includes a torsion box structure, in particular a box-shaped closed cross-section, when viewed across the span direction, while the torsion box structure extends along the span direction. Further, the one or more actuator coupling points are arranged at the spar structure for main load introduction from the one or more actuators into the spar structure.

By the spar structure having the form of a torsion box structure, the spar structure has high torsional stiffness and strength and high torsional loads can be absorbed. In such a way, the spar structure alone is capable of absorbing the high internal loads from actuator failure cases and tolerances, while the shell structure is decoupled from the internal loads and merely absorbs the relatively low external aerodynamic loads. This allows that only the spar structure is made of high strength material, such as CFRP or GFRP, while the shell structure might be made of a different material with lower mechanical properties and might have a simpler design without complex reinforcements of the actuator coupling points. The simpler design in turn might lead to the reduction of quality issues, manufacturing time and manufacturing complexity, enabling less energy consuming manufacturing processes, such as out-of-autoclave curing. Also, weight might be reduced.

According to a preferred embodiment, the torsion box structure is formed by opposite first and second side elements and opposite front and aft cross elements connecting the first and second side elements, so that the first and second side elements and the front and aft cross elements together form a closed, box-shaped cross section, when viewed across the span direction. In such a way, a very effective torsion box structure is formed which shows high torsional stiffness and strength and can absorb high torsional loads.

In particular, it is preferred that the first side element is aligned with and preferably attached to the first side panel, while the second side element is aligned with and preferably attached to the second side panel. In such a way, a very strong, efficient and aerodynamically advantageous arrangement is provided.

According to a preferred embodiment, the first and second side panels are formed separately from the spar structure, preferably as separate and/or separable and/or non-monolithic components. Further, the first and second side panels are attached to the spar structure by attachment means, in particular by fasteners such as bolts or rivets, by adhesive, or by form-fit connections. In such a way, the first and second side panels are decoupled from the spar structure and can be formed individually by different materials and different structures, as individually required.

According to a further preferred embodiment, the first and/or second side panels are formed from a different material than the spar structure. In such a way, the material for the first and/or second side panels, i.e. for the shell structure, and for the spar structure can be chosen individually as required.

According to a further preferred embodiment, the first and/or second side panels are formed from or include a green fiber material, preferably based on natural or recycled fibers. As the mechanical loading on the shell structure, i.e. on the first and/or second side panels, is relatively low, such green fiber material can be included, thereby contributing to general sustainability goals.

According to a further preferred embodiment, the first and/or second side panels are formed as a honeycomb structure, preferably a green fiber honeycomb structure. Such a green fiber honeycomb structure is ideally suitable for taking up the aerodynamic loads while at the same time include green fibers for environmental reasons.

According to a further preferred embodiment, the spar structure is formed from a fiber composite material, preferably a monolithic fiber composite material, preferably CFRP or GFRP material. Such a fiber composite material is ideally suitable for taking up the high internal loads resulting from actuator failure cases or tolerances. The spar structure might also be formed from a metal material.

According to a further preferred embodiment, the first side panel and/or the second side panel is attached to the spar structure by a plurality of fasteners, such as bolts or rivets. In such a way, an efficient, reliable, and flexible attachment is provided.

According to a further preferred embodiment, the first side panel and/or the second side panel is attached to the spar structure along an attachment surface where the first side panel and/or the second side panel overlaps and rest against the spar structure. Preferably the first side panel overlaps and rest against the first side element of the spar structure along a first attachment surface, and the second side panel overlaps and rest against the second side element of the spar structure along a second attachment surface. In such a way, an efficient, reliable, and flexible attachment is provided.

In particular, it is preferred that the first side panel and/or the second side panel is attached to the spar structure by a pattern of fasteners and form-fit elements distributed over the attachment surface. This relates to a particularly simple, efficient, and reliable attachment.

It is further preferred that the form-fit elements comprise a projecting part engaging a recessed part, wherein the projecting part is provided at one of the first and second side panels and the spar structure, while the recessed part is provided at the other one of the first and second side panels and the spar structure. This further relates to a particularly simple, efficient, and reliable attachment.

It is also preferred that the form-fit elements are arranged in a zig-zag pattern along the attachment surface with the fasteners distributed between them. This also relates to a particularly simple, efficient, and reliable attachment in all directions.

According to a preferred embodiment, the spar structure is designed to withstand maximum loads caused by one or more malfunctioning actuator and/or by actuator tolerances, whereas the first and second side panels are designed to withstand maximum aerodynamic loads caused by the circulating airflow on the first and second side panels, in particular when the aerodynamic control surface is deflected. In such a way, the spar structure and the shell structure are designed individually for different load cases, which leads to a very efficient design of the aerodynamic control surface.

A further aspect of the invention relates to an aircraft comprising the aerodynamic control surface according to any of the afore-described embodiments. Features and advantages described above in connection with the aerodynamic control surface apply vis-à-vis also to the aircraft.

Hereinafter, preferred embodiments of the invention are described in more detail by reference to a drawing. The drawing shows in
- Fig. 1: a perspective view of an aircraft according to the invention,
- Fig. 2: a side view of a vertical tail unit as used in the aircraft of Fig. 1, including an aerodynamic control surface in the form of a rudder,
- Fig. 3: a side view of an isolated aerodynamic control surface in the form of a rudder, according to an embodiment of the invention,
- Fig. 4: a cross-sectional view of the aerodynamic control surface shown in Fig. 3,
- Fig. 5: an exploded side view of the aerodynamic control surface shown in Fig. 3, individually showing the spar structure and the shell structure including the related forces acting on them, and
- Fig. 6: a cross-sectional view of an aerodynamic control surface as shown in Fig. 4, with detailed views of the attachment of the shell structure to the spar structure.

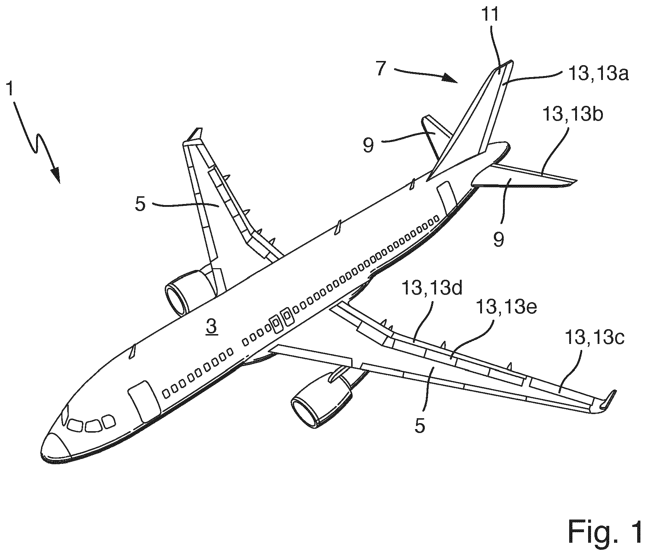

In Fig. 1 an aircraft 1 according to an embodiment of the invention is illustrated. The aircraft 1 comprises a fuselage 3, wings 5, and a tail unit 7 including horizontal tail planes 9 and a vertical tail plane 11. The aircraft 1 comprises several aerodynamic control surfaces 13 according to embodiments the invention, such as a rudder 13a, elevators 13b, ailerons 13c, flaps 13d, and spoilers 13e.

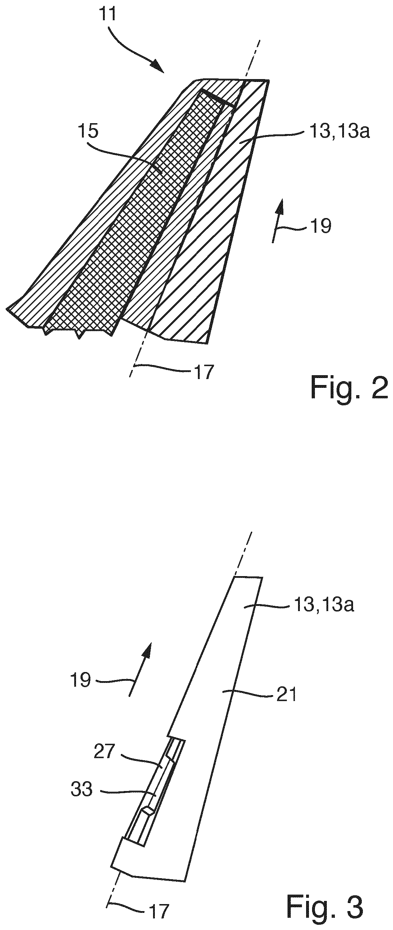

Fig. 2 shows a vertical tail plane 11 including an aerodynamic control surface 13 in the form of a rudder, according to an embodiment of the invention. The aerodynamic control surface 13 is movable relative to a vertical fin 15 about a hinge axis 17 extending in a span direction 19.

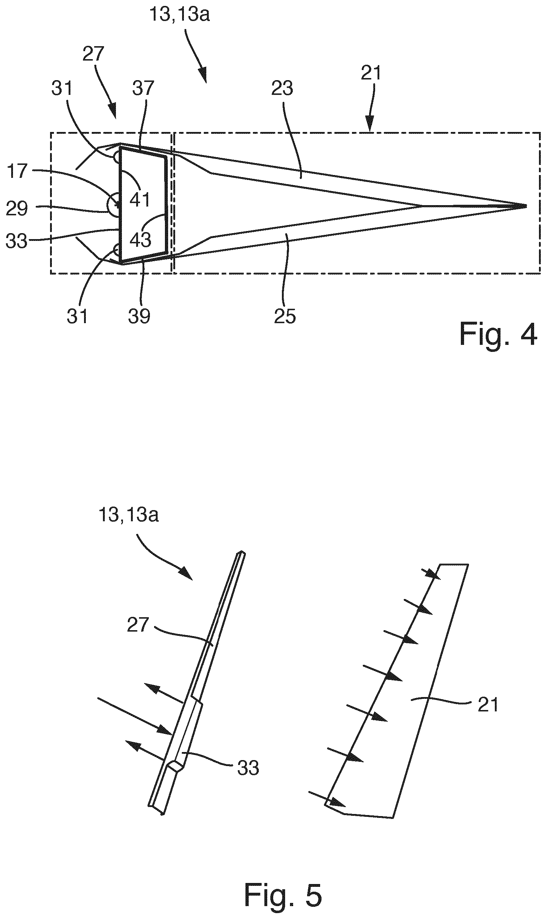

Figs. 3 and 4 show the aerodynamic control surface 13 in more detail. The aerodynamic control surface 13 comprises a shell structure 21 including a first side panel 23 and a second side panel 25, and a spar structure 27 extending in a span direction 19 and attached to the first and second side panels 23, 25 for common movement with the first and second side panels 23, 25. The spar structure 27 comprises or is attached to at least one hinge part 29 in the form a hinge bracket for enabling rotation of the aerodynamic control surface 13 about the hinge axis 17. The aerodynamic control surface 13 comprises one or more actuator coupling points 31 in the form of bearings or brackets for coupling the aerodynamic control surface 13 to one or more actuators (not shown) for moving the aerodynamic control surface 13 about the hinge axis 17.

As visible is Fig. 4, the spar structure 27 includes a torsion box structure 33, in particular a box-shaped closed cross-section, when viewed across the span direction 19, while the torsion box structure 33 extends along the span direction 19. Further, the one or more actuator coupling points 31 are arranged at the spar structure 27 for main load introduction from the one or more actuators into the spar structure 27. The torsion box structure 33 is formed by opposite first and second side elements 37, 39 and opposite front and aft cross elements 41, 43 connecting the first and second side elements 37, 39, so that the first and second side elements 37, 39 and the front and aft cross elements 41, 43 together form a closed, box-shaped cross section, when viewed across the span direction 19.

The first side element 37 is aligned with and attached to the first side panel 23, while the second side element 39 is aligned with and attached to the second side panel 25. The first and second side panels 23, 25 are formed separately from the spar structure 27. However, the first and second side panels 23, 25 are attached to the spar structure 27 by attachment means 47 including fasteners 51 and form-fit elements 59.

The first and second side panels 23, 25 are formed from a different material than the spar structure 27. Specifically, the first and second side panels 23, 25 are formed from or include a green fiber material based on natural or recycled fibers. Further, the first and second side panels 23, 25 are formed as a honeycomb structure, specifically a green fiber honeycomb structure. The spar structure 27 is formed from a monolithic fiber composite material, such as CFRP or GFRP material. As indicated in Fig. 5, the spar structure 27 is designed to withstand maximum loads caused by one or more malfunctioning actuator and/or by actuator tolerances, whereas the first and second side panels 23, 25 are designed to withstand maximum aerodynamic loads caused by the circulating airflow on the first and second side panels 23, 25, when the aerodynamic control surface 13 is deflected.

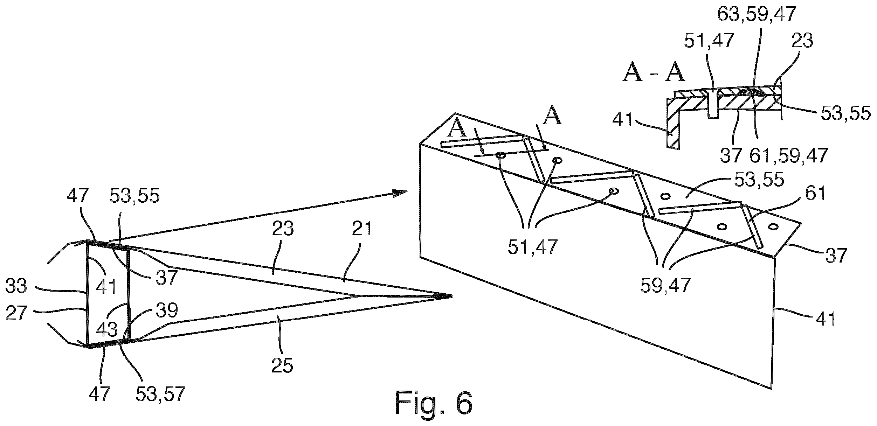

The first side panel 23 and the second side panel 25 are attached to the spar structure 27 by a plurality of fasteners 51 including bolts or rivets. Further, the first side panel 23 and the second side panel 25 are attached to the spar structure 27 along an attachment surface 53 where the first side panel 23 and the second side panel 25 overlap and rest against the spar structure 27 (see Fig. 6). Specifically, the first side panel 23 overlaps and rest against the first side element 37 of the spar structure 27 along a first attachment surface 55, and the second side panel 25 overlaps and rest against the second side element 39 of the spar structure 27 along a second attachment surface 57.

As shown in Fig. 6, the first side panel 23 and the second side panel 25 are attached to the spar structure 27 by a pattern of fasteners 51 and form-fit elements 59 distributed over the attachment surface 53. The form-fit elements 59 comprise a projecting part 61 engaging a recessed part 63, wherein the projecting part 61 is provided at the spar structure 27, while the recessed part 63 is provided at the first and second side panels 23, 25. The form-fit elements 59 are arranged in a zig-zag pattern along the attachment surface 53 with the fasteners 51 distributed between them.

By the present invention as described above, in particular by the spar structure 27 having the form of a torsion box structure 33, the spar structure 27 has high torsional stiffness and strength and high torsional loads can be absorbed. In such a way, the spar structure 27 alone is capable of absorbing the high internal loads from actuator failure cases and tolerances, while the shell structure 21 is decoupled from the internal loads and merely absorbs the relatively low external aerodynamic loads. This allows that only the spar structure 27 is made of high strength material, such as CFRP or GFRP, while the shell structure 21 might be made of a different material with lower mechanical properties and may have a simpler design without complex reinforcements of the actuator coupling points 31. The simpler design in turn may lead to the reduction of quality issues, manufacturing time and manufacturing complexity, enabling less energy consuming manufacturing processes, such as out-of-autoclave curing. Also, weight can be reduced.

## Claims

1. An aerodynamic control surface (13) for an aircraft (1), comprising
a shell structure (27) comprising a first side panel (23) and an opposite second side panel (25), and
a spar structure (27) extending in a span direction (19) and attached to the first and second side panels (23, 25) for common movement with the first and second side panels (23, 25),
wherein the spar structure (27) comprises or is attached to at least one hinge part (29) for enabling rotation of the aerodynamic control surface (13) about a hinge axis (17),
wherein the aerodynamic control surface (13) comprises one or more actuator coupling points (31) for coupling the aerodynamic control surface (13) to one or more actuators for moving the aerodynamic control surface (13) about the hinge axis (17),
**characterized in that**
the spar structure (27) includes a torsion box structure (33), and
the one or more actuator coupling points (31) are arranged at the spar structure (27) for main load introduction from the one or more actuators into the spar structure (27).

2. The aerodynamic control surface (13) according to claim 1, wherein the torsion box structure (33) is formed by opposite first and second side elements (37, 39) and opposite front and aft cross elements (41, 43) connecting the first and second side elements (37, 39), so that the first and second side elements (37, 39) and the front and aft cross elements (41, 43) together form a closed, box-shaped cross section, when viewed across the span direction (19).

3. The aerodynamic control surface (13) according to claim 2, wherein the first side element (37) is aligned with the first side panel (23), and the second side element (39) is aligned with the second side panel (25).

4. The aerodynamic control surface (13) according to any of claims 1 to 3, wherein the first and second side panels (23, 25) are formed separately from the spar structure (27) and are attached to the spar structure (27) by attachment means (47).

5. The aerodynamic control surface (13) according to any of claims 1 to 4, wherein the first and/or second side panels (23, 25) are formed from a different material than the spar structure (27).

6. The aerodynamic control surface (13) according to any of claims 1 to 5, wherein the first and/or second side panels (23, 25) are formed from or include a green fiber material, preferably a green fiber honeycomb material.

7. The aerodynamic control surface (13) according to any of claims 1 to 6, wherein the first and/or second side panels (23, 25) are formed as a honeycomb structure.

8. The aerodynamic control surface (13) according to any of claims 1 to 7, wherein the spar structure (27) is formed from a fiber composite material.

9. The aerodynamic control surface (13) according to any of claims 1 to 8, wherein the first side panel (23) and/or the second side panel (25) is attached to the spar structure (27) by a plurality of fasteners (51).

10. The aerodynamic control surface (13) according to any of claims 1 to 9, wherein the first side panel (23) and/or the second side panel (25) is attached to the spar structure (27) along an attachment surface (53) where the first side panel (23) and/or the second side panel (25) overlaps and rest against the spar structure (27).

11. The aerodynamic control surface (13) according to claim 10, wherein the first side panel (23) and/or the second side panel (25) is attached to the spar structure (27) by a pattern of fasteners (51) and form-fit elements (59).

12. The aerodynamic control surface (13) according to claim 11, wherein the form-fit elements (59) comprise a projecting part (61) engaging a recessed part (63), wherein the projecting part (61) is provided at one of the first and second side panels (23, 25) and the spar structure (27), while the recessed part (63) is provided at the other one of the first and second side panels (23, 25) and the spar structure (27).

13. The aerodynamic control surface (13) according to claim 11, wherein the form-fit elements (59) are arranged in a zig-zag pattern along the attachment surface (53).

14. The aerodynamic control surface (13) according to any of claims 1 to 13, wherein the spar structure (27) is designed to withstand maximum loads caused by one or more malfunctioning actuator and/or by actuator tolerances, whereas the first and second side panels (23, 25) are designed to withstand maximum aerodynamic loads.

15. An aircraft (1) comprising the aerodynamic control surface (13) according to any of claims 1 to 14.
